# EUROPEAN PATENT APPLICATION

(11) **EP 0 692 529 A1**
(43) Date of publication of application: **17.01.1996**
(21) Application number: 95304786.7
(22) Date of filing: 10.07.1995
(51) Int. Cl.: C09D 123/16

(54) **A method of coating steel with a thermoplastic resin (composition) and a laminated article obtained by said method**

(30) Priority: 13.07.1994 JP 161558/94; 31.08.1994 JP 206835/94
(71) Applicant: SUMITOMO CHEMICAL COMPANY, LIMITED, Osaka (JP)
(72) Inventor: Nezu, Syoichi, Chiba-shi, Chiba-ken (JP); Kubo, Kohji, Ichihara-shi, Chiba-ken (JP)
(74) Representative: Cresswell, Thomas Anthony

(57) **Abstract**

A method of coating steel is disclosed, which method comprises applying to the steel an ethylene-α-olefin copolymer resin (A) having a density of 0.915 to 0.927 g/cm³, a melt flow rate determined at 190°C under a load of 2.16 kg (MFR_{2.16}) of 0.1 to 1.0 g/10 min. and a melt flow rate ratio (MFRR) defined by the formula (1) :

MFRR = MFR_{21.6} / MFR_{2.16} (1)

wherein MFR_{21.6} is the melt flow rate determined at 190°C under a load of 21.6 kg, of 30 or more, the product of MFR_{2.16} and MFRR being from 8 to 45 g/10 min.

A method of coating steel is also disclosed which comprises applying to the steel a thermoplastic resin composition comprising not less than 75% by weight but less than 100% by weight of a component (A) as defined above and not more than 25% by weight of a component (B), which is one or more of the following components (B-1), (B-2) and (B-3) :
Component (B-1): a high-pressure low density polyethylene having a melt flow rate determined at 190°C under a load of 2.16 kg of 0.2 to 100 g/10 min;
Component (B-2): an ethylene-unsaturated carboxylic acid ester copolymer resin containing 0.1 to 10% by weight of an unsaturated carboxylic acid ester and having a melt flow rate determined at 190°C under a load of 2.16 kg of 0.2 to 100 g/10 min;
Component (B-3): an ethylene-vinyl ester copolymer resin containing 0.1 to 10% by weight of a vinyl ester and having a melt flow rate determined at 190°C under a load of 2.16 kg of 0.2 to 100 g/10 min.

Laminated articles obtained by said methods are also disclosed.

## Description

The present invention relates to a method of coating a steel with a thermoplastic resin (composition) and a laminated article obtained by said method.

More particularly, it relates to a method of coating a steel with a thermoplastic resin (composition) and a laminated article comprising a steel and said thermoplastic resin (composition), which is good in corrosion resistance, abrasion resistance, chemical resistance and processability, gives a coated surface with a low stickiness and high hardness, and has a remarkably improved impact strength at low temperatures.

Steel pipes used for transporting natural gas, crude oil, etc., are coated, before use, with polyolefin resins for the purpose of corrosion prevention and protection from external environment. The polyolefin resins used as the corrosion resistant protective layer include high-pressure low density polyethylene, linear low density polyethylene, medium density polyethylene and ethylene-vinyl acetate copolymer, but all of these polymers have the drawback of lowering the impact resistance at low temperatures of -45°C or below. In recent years, the mining areas of natural gas and crude oil have been extended to Alaska, Siberia or further northern polar regions in addition to the previous high temperature regions such as the Middle East.

Accordingly, the storage, transportation and burying operations of steel pipes have come to be more frequently conducted at extremely low temperatures of -45°C or below and further -60 °C or below. When an impact force is applied to the protective coating layer of pipes at such low temperatures to propagate cracks, it may possibly cause the corrosion of steel pipes to be aggravated from the cracked parts. This gives a serious problem regarding the safe transportation of natural gas and crude oil.

For improving the low temperature impact strength of such protective coating, it has already been proposed to use a specific ethylene-vinyl acetate copolymer (JP-B-62-9138) or to use a specific ethylene-α-olefin copolymer (JP-B-2-8605). Both of theses patents, however, do not refer to the impact strength with notched test pieces, which is an index for resistance to impactive destructive force at the aforesaid extremely low temperatures; further they give no consideration to the use of the copolymers in an environment of -45 °C or below.

The object of the present invention is to provide a method of coating a steel with a thermoplastic resin (composition) and a laminated article comprising a steel and said thermoplastic resin (composition), which is good in corrosion resistance, abrasion resistance, chemical resistance and processability, gives a coating surface with a low stickiness and high hardness, and has a remarkably improved impact strength at low temperatures.

Accordingly, an object of the present invention is to provide a method of coating a steel with an ethylene-α-olefin copolymer resin which is characterized by using said ethylene-α-olefin copolymer resin (A) having a density of 0.915 to 0.927 g/cm³, a melt flow rate (MFR_{2. 16}) determined at 190 °C under a load of 2.16 kg of 0.1 to 1.0 g/10 min., a melt flow rate ratio (MFRR) defined by the following formula (1) of 30 or more, and the product of MFR_{2. 16} and MFRR of 8 to 45.

MFRR= MFR_{21. 6} / MFR_{2.16} (1) ;

MFR_{21.6} : A melt flow rate determined at 190°C under a load of 21.6 kg ;
MFR_{2.16} : A melt flow rate determined at 190°C under a load of 2.16 kg.

Another object of the present invention is to provide a method of coating a steel with a thermoplastic resin composition which is characterized by using said thermoplastic resin composition comprising not less than 75 % by weight and less than 100 % by weight of a component (A) and not more than 25 % by weight of a component (B).
Component (A) : the above-mentioned ethylene- α-olefin copolymer resin (A).
Component (B) : at least one component selected from the group consisting of the following components (B-1), (B-2) and (B-3).
   Component (B-1) : a high-pressure low density polyethylene having a melt flow rate determined at 190°C under a load of 2.16 kg of 0.2 to 100 g/10 min.
   Component (B-2) : an ethylene-unsaturated carboxylic acid ester copolymer resin containing 0.1 to 10 % by weight of an unsaturated carboxylic acid ester and having a melt flow rate determined at 190°C under a load of 2.16 kg of 0.2 to 100 g/10 min.
   Component (B-3) : an ethylene-vinyl ester copolymer resin containing 0.1 to 10 % by weight of a vinyl ester and having a melt flow rate determined at 190 °C under a load of 2.16 kg of 0.2 to 100 g/10 min.

Further, the object of the present invention is to provide a laminated article comprising a steel and an ethylene- α-olefin copolymer resin which is characterized by using the above-mentioned ethylene- α-olefin copolymer resin (A).

Furthermore, the object of the present invention is to provide a laminated article comprising a steel and a thermoplastic resin composition which is characterized by using the above-mentioned thermoplastic resin composition comprising not less than 75 % by weight and less than 100 % by weight of said component (A) and not more than 25 % by weight of said component (B).

The ethylene-α-olefin copolymer resin (A) of the present invention has a density of 0.915 to 0.927 g/cm³, preferably 0.918 to 0.924 g/cm³. The density is determined at 23°C according to JIS K6760. When the density is too low, the abrasion resistance, chemical resistance and heat resistance are poor, whereas when the density is too high, the impact strength at low temperatures is remarkably low.

The ethylene-α-olefin copolymer resin (A) of the present invention has a melt flow rate (MFR_{2. 16}) determined at 190°C under a load of 2. 16 kg of 0.1 to 1.0 g/10 min., preferably 0.1 to 0.8 g/10 min., more preferably 0.2 to 0.8 g/10 min. The melt flow rate (MFR_{2. 16}) is determined according to JIS K6760.

When the melt flow rate (MFR_{2. 16}) is too low, the processability becomes poor because the torque required at the time of extrusion is high and a shark skin (a rough skin) is generated on the surface of the coated layer. On the other hand, when the melt flow rate (MFR_{2. 16}) is too high, the impact strength at low temperatures is low, and further, the thickness of the coated layer varies widely because the melt tension becomes low.

The ethylene-α-olefin copolymer resin (A) of the present invention has a melt flow rate ratio (MFRR) defined by the following formula (1) of 30 or more, preferably 40 to 120, more preferably 40 to 100.

MFRR= MFR_{21. 6} / MFR_{2. 16} (1) ;

MFR_{21. 6} : A melt flow rate determined at 190°C under a load of 21.6 kg ;
MFR_{2. 16} : A melt flow rate determined at 190°C under a load of 2.16kg.

When the melt flow rate ratio (MFRR) is too low, the processability becomes poor because the torque required at the time of extrusion is high and a shark skin is generated on the surface of the coated layer. On the other hand, when the melt flow rate ratio (MFRR) is too high, the impact strength at low temperatures is low.

The content of the ethylene in the ethylene- α-olefin copolymer resin (A) of the present invention is 50 % by weight or more, preferably 85 to 97 % by weight.

The α-olefin used in the ethylene- α-olefin copolymer resin (A) of the present invention includes propylene, butene-1, hexene-1, octene-1, decene-1 and 4-methylpentene-1.

The content of the α-olefin in the ethylene-α-olefin copolymer resin (A) of the present invention is preferably 3 to 15 % by weight.

When the α-olefin is butene-1, the content of the α-olefin in the ethylene-α-olefin copolymer resin (A) is more preferably 3 to 11 % by weight, most preferably 4 to 8 % by weight.

When the α-olefin is hexene-1, octene-1 or 4-methylpentene-1, the content of the α-olefin in the ethylene-α-olefin copolymer resin (A) is more preferably 3 to 14 % by weight, most preferably 4 to 10 % by weight.

When the content of the α-olefin is too small, the impact strength at low temperatures is sometimes low. On the other hand, when the content of the α-olefin is too large, the abrasion resistance, chemical resistance and heat resistance are sometimes poor.

The ethylene-α-olefin copolymer resin (A) of the present invention has the product of MFR_{2. 16} and MFRR of 8 to 45.

When the α-olefin of the ethylene-α-olefin copolymer resin (A) is butene-1, the product of MFR_{2. 16} and MFRR is preferably 8 to 30, more preferably 10 to 25. When the α-olefin of the ethylene-α-olefin copolymer resin (A) is hexene-1, octene-1 or 4-methylpentene-1, the product of MFR_{2. 16} and MFRR is preferably 10 to 40, more preferably 10 to 35.

When the product of MFR_{2. 16} and MFRR is too low, the processability becomes poor because the torque required at the time of extrusion is high and a shark skin is generated on the surface of the coated layer. On the other hand, when the product of MFR_{2. 16} and MFRR is too high, the impact strength at low temperatures is low, therefore, it is difficult to obtain the improvement of the impact strength with notched test pieces, which is an index for resistance to generation and propagation of cracks caused by impactive destructive force given by sharp rocks and/or the collision between steel pipes at low temperatures, when they are practically transported, storaged or buried.

The ethylene-α-olefin copolymer resin (A) of the present invention is so-called a linear low density polyethylene (LLDPE).

The ethylene-α-olefin copolymer resin (A) of the present invention may be prepared by an ionic copolymerization of ethylene with an α-olefin in the presence of a solvent, or in a gas-solid phase, a liquid-solid phase or a homogeneous liquid phase, using a Ziegler type catalyst comprising a combination of a compound containing a transition metal of IVa to VIa group on the periodic table and an organometallic compound containing a metal of I to III group on the periodic table, under conditions of a polymerization temperature of 30 to 300 °C and a polymerization pressure of from atmospheric pressure to 3000 kg/cm.

As a typical method for preparing the ethylene-α-olefin copolymer resin (A) of the present invention, the method for copolymerizing ethylene with an α-olefin by a slurry polymerization process or a gas phase polymerization process, using the catalyst disclosed in JP-A-1-263102, JP-A-61-19607, JP-A-57-155206, JP-B-52-39714 and JP-B-55-8083, may be mentioned.

Said ethylene- α-olefin copolymer resin (A) is also the component (A) of the thermoplastic resin composition of the present invention.

The component (B) of the present invention is at least one component selected from the group consisting of the following components (B-1), (B-2) and (B-3).

The component (B-1) of the present invention is a high-pressure low density polyethylene (HPLD) having a melt flow rate determined at 190°C under a load of 2.16 kg of 0.2 to 100 g/10 min., preferably 0.3 to 20 g/10 min. When the melt flow rate is too low, the compatibility with the component (A) becomes inferior, whereas when the melt flow rate is too high, the impact strength at low temperatures is inferior. The melt flow rate is determined according to JIS K6760.

The component (B-1) used in the present invention may be obtained by polymerization of ethylene, or copolymerization of ethylene with a small amount ( 5 % by weight or less ) of a comonomer such as α-olefin, i.e., propylene, butene-1 etc., a silane compound and acid anhydride, using a radical initiator such as an organic peroxide and a source of oxygen, and under conditions of a polymerization temperature of 130 to 300 °C and a polymerization pressure of 500 to 3000 kg/cm.

The component (B-2) is an ethylene-unsaturated carboxylic acid ester copolymer resin containing 0.1 to 10 % by weight, preferably 2 to 7 % by weight of an unsaturated carboxylic acid ester and having a melt flow rate determined at 190 °C under a load of 2.16 kg of 0.2 to 100 g/10 min., preferably 0.3 to 20 g/10 min.

When the content of the unsaturated carboxylic acid ester is too small, the impact strength at low temperatures is inferior, whereas when the content of the unsaturated carboxylic acid ester is too large, heat resistance is inferior.

When the melt flow rate is too low, the compatibility with the component (A) becomes inferior, whereas when the melt flow rate is too high, the impact strength at low temperatures is inferior. The melt flow rate is determined according to JIS K6760.

The unsaturated carboxylic acid ester used in the component (B-2) of the present invention is preferably an unsaturated carboxylic acid ester having 4 to 8 carbons, and includes an acrylic acid ester such as methylacrylate, ethylacrylate, n-propylacrylate and t-butylacrylate; a methacrylic acid ester such as methylmethacrylate, ethylmethacrylate, n-propylmethacrylate and t-butylmethacrylate.

The component (B-2) used in the present invention may be obtained by copolymerization of ethylene with the unsaturated carboxylic acid ester, using a radical initiator such as an organic peroxide and a source of oxygen, and under conditions of a polymerization temperature of 130 to 300°C and a polymerization pressure of 500 to 3000 kg/cm.

The component (B-3) is an ethylene-vinyl ester copolymer resin containing 0. 1 to 10 % by weight, preferably 2 to 7 % by weight of a vinyl ester and having a melt flow rate determined at 190°C under a load of 2.16 kg of 0.2 to 100 g/10 min., preferably 0.3 to 20 g/10 min.

When the content of the vinyl ester is too small, the impact strength at low temperatures is inferior, whereas when the content of the vinyl ester is too large, heat resistance is inferior.

When the melt flow rate is too low, the compatibility with the component (A) becomes inferior, whereas when the melt flow rate is too high, the impact strength at low temperatures is inferior. The melt flow rate is determined according to JIS K6760.

The vinyl ester used in the component (B-3) of the present invention includes vinyl acetate and vinyl propionate.

The component (B-3) used in the present invention may be obtained by copolymerization of ethylene with the vinyl ester, using a radical initiator such as an organic peroxide and a source of oxygen, and under conditions of a polymerization temperature of 130 to 300°C and a polymerization pressure of 500 to 3000 kg/cm.

The thermoplastic resin composition used in the present invention comprises not less than 75 % by weight and less than 100 % by weight of the component (A) and not more than 25 % by weight of the component (B), preferably 75 to 95 % by weight of the component (A) and 25 to 5 % by weight of the component (B), more preferably 80 to 90 % by weight of the component (A) and 20 to 10 % by weight of the component (B).

When the proportion of the component (A) is too small (that is, the proportion of the component (B) is too large), it is difficult to obtain the improvement of the impact strength with notched test pieces, which is an index for resistance to generation and propagation of cracks caused by impactive destructive force given by sharp rocks and/or the collision between steel pipes at low temperatures, when they are practically transported, storaged or buried.

The thermoplastic resin composition used in the present invention may be obtained by uniformly melt-kneading the component (A) and the component (B).

The thermoplastic resin composition may further be incorporated, as long as the object of the present invention is attained, with other conventional agents, for example, an antioxidant, a neutralizing agent, an ultraviolet absorbant, an internal lubricant, a pigment, a flame retardant, and an inorganic or an organic filler.

The steel used in the present invention includes a steel pipe and a steel sheet.

In the present invention, the method of coating the steel with the thermoplastic resin (composition) of the present invention, is exemplified, for example, as follows. In the present specification, said thermoplastic resin (composition) means the ethylene-α-olefin copolymer resin (A) and the thermoplastic resin composition comprising the component (A) and the component (B).

The method for protecting a steel pipe of a pipeline from a corrosion includes a method of coating a steel pipe with a coating layer [composed of a thermoplastic resin (composition)] comprising , for example, the steps of:
(1) coating a preheated steel pipe with an adhesive layer to form an adhesive-coated steel pipe,
(2) helically winding a sheet of a thermoplastic resin (composition) immediately after extruded from an extruder around the adhesive-coated steel pipe to obtain a coated steel pipe with the thermoplastic resin (composition), and
(3) cooling the thus obtained coated steel pipe having a coating layer of the thermoplastic resin (composition) to solidify the coating layer.

The adhesive layer in the above-mentioned step (1) includes an adhesive agent and an adhesive resin such as a resin containing an epoxy group and/or an acid anhydride.

Said method provides a means for protecting a steel pipe from corrosion.

The laminated article comprising the steel and the thermoplastic resin (composition), namely the coated steel pipe obtained by said method, is superior in corrosion prevention effect and in durability, therefore, the laminated article is expected to have various uses.

### EXAMPLE

The present invention will be described in more detail with reference to the following Examples, which are not intended to restrict the scope of the invention.

The methods for evaluations of properties are as follows.
(1) Impact strength (with notched test piece) at a low temperature [IMS];
   A notched rectangular test piece (9.53 mm in length and 63.5 mm in width) having a 45-degree V-shaped notch on the upper side of the center of the width of the rectangle (the lowermost point of the V-shaped notch being positioned 5.0 mm apart from the lower side of the center of the width of the rectangle) was used. The test piece was prepared by punching out of a pressed sheet of 1 mm in thickness. The impact strength was determined in accordance with ASTM D-1822 at -60°C using a pendulum type tensile impact tester manufactured by Toyo Seiki Co.
(2) Torque (an index of processability);
   By using a Brabender plasticoder manufactured by Brabender Co., the torque after 30 minutes at 160 °C and 60 rpm was determined. The amount of the charged sample was 40 g. The sample had been incorporated with 0.2 % by weight of Sumilizer WXR (trade name; manufactured by Sumitomo Chemical Co., Ltd.) as an antioxidant.
(3) Vicat softening point [VSP];
   It was determined in accordance with ASTM D-1523, by pushing a needle having a top area of 1 mm against the surface of a sample, using a Heat distortion tester manufactured by Toyo Seiki Co., under conditions of a load of 1 kg and a raising speed of a temperature of 50 °C/hr. The temperature when the top of the needle was penetrated into 1.0 mm from the surface of the sample was regarded as a vicat softening point. The test piece was prepared by a press molding.
(4) Shark skin-1 (a rough skin of the surface of an extruded strand);
   A thermoplastic resin was extruded from a conical nozzle having a diameter of 1.52 mm, a length of 50.8 mm and an inflow-angle of 90-degree, by using a Capilograph manufactured by Toyo Seiki Co., under conditions of a falling speed of a plunger of 30 mm/min., and a shear rate of 101.9 sec⁻¹, to obtain a strand, and its surface was evaluated by eyes.
   ○ ; Good with no rough skin ; × ; Poor with rough skin.
   Although, a shear rate practically used for an extrusion coating in industrial fields is varied and depends on conditions of an extrusion rate, a width of a die and a gap of a lip, and it is generally larger than the shear rate above-mentioned (101.9 sec⁻¹), we think it is reasonable to use the above-mentioned test as the standard for the evaluation of processability.
(5) Shark skin-2 (a rough skin and a streak of the surface of an extruded sheet);
   A thermoplastic resin composition was extruded from a coat hanger die having a width of 200 mm and a gap of lip of 0.5 mm to obtain a sheet having dimensions of 180 mm in width and 0.5 mm in thickness, by using 65 mm φ of T-die type extruder under conditions of a temperature of 250°C, an extrusion rate of 75 kg/h and a shear rate at the exit of the die of 520 sec⁻¹. The surface of the thus obtained sheet was evaluated by eyes.
   Shark skin : ○ ; Good with no rough skin ; × ; Poor with rough skin.
   Streak : ○ ; Good with no streak ; × ; Poor with streaks.
   Although, a shear rate practically used for an extrusion coating in industrial fields is slightly larger than the shear rate above-mentioned (520 sec⁻¹), we think it is reasonable to use the above-mentioned test as the standard for the evaluation of processability.
(6) Dynamic penetration test [DYNP];
   A press sheet of a thermoplastic resin (composition) having a thickness of 2.5 mm was adhered to an acid-washed steel board having a thickness of 2 mm at 250°C by the use of an adhesive resin film (A trade name is "Bondfast 7B " manufactured by Sumitomo Chemical Co., Ltd.) so that the press sheet covered a surface of the steel board. The press sheet-covered steel board was dipped in a hot water at 60°C for 1 hour. Immediately after taking the press sheet-covered steel board out of the hot water, a weight of 1 kg was dropped from a height of 1 m on a punch having an edge diameter of 15.9 mm put on the surface of the press sheet. The depth in which the punch cut into the press sheet was determined. The smaller the depth. the better the scratch resistance at high temperature.
(7) Pinhole test;
   It was determined by the spot pinhole tester model KA8613 (manufactured by Sanyu Denshi Corp.) whether fine pinholes (defects: broken parts of the coated layer) were formed or not in the deformed parts of the resin (composition) formed by the drop of the weight as described in section (6) above. A voltage of 10 kV was applied between the coated layer composed of the resin (composition) and the steel board, and it was determined whether pinholes exist or not by observing electric currents between the surface of the coated layer and the steel board.

### Examples 1 to 7 and Comparative Examples 1 to 10

The properties of the ethylene-α-olefin copolymer resins shown in Tables 1 to 3 were measured by the above-mentioned methods. The results were shown in Tables 1 to 3.

On the Tables 1 to 3, the abbreviations show as follows.
Kind *1 : The kind of the ethylene- α-olefin copolymer resins A-1 to A-17 ;
- A-1 to A-13: ; Ethylene-butene-1 copolymer resin (LLDPE)
- A-14 and A-15: ; Ethylene-hexene-1 copolymer resin (LLDPE)
- A-16: ; Ethylene-octene-1 copolymer resin (LLDPE)
- A-17: ; Ethylene-4-methylpentene-1 copolymer resin (LLDPE)
Kind *2 : The kind of the α-olefin ;
Bu ; Butene-1 Hx ; Hexene-1
Oc ; Octene-1 MPe ; 4-methylpentene-1

The results shown in Tables 1 to 3 reveal the following :
The ethylene- α-olefin copolymer resins of Examples, which meet the essential conditions of the present invention, exhibited satisfactory results in all of the evaluations shown in the Tables 1 and 3. On the other hand, the ethylene-α-olefin copolymer resin of Comparative Example 1, wherein MFR_{2. 16} and the product ( ①×② ) of MFR_{2. 16} and MFRR are too low, those of Comparative Examples 2, 6 and 10, wherein the product (①×② ) is too high, those of Comparative Examples 3 and 4, wherein MFRR is too low, those of Comparative Examples 5 and 7, wherein MFR_{2. 16} and the product (①×② ) of MFR_{2. 16} and MFRR are too high, that of Comparative Example 8, wherein the density is too high, and that of Comparative Example 9, wherein MFR_{2. 16} is too low, were inferior in at least one property among the evaluated properties.

### Examples 8 to 16 and Comparative Examples 11 to 23

The thermoplastic resin compositions having blend ratios shown in Tables 4 to 7 were melt-kneaded and pelletized through a single screw extruder of 30 mm in diameter. The properties of the thus obtained resin compositions were measured by the above-mentioned methods. The results were shown in Tables 4 to 7.

On the Tables 4 to 7, the abbreviations show as follows.
Kind *1 : Same as above-mentioned on the Tables 1 to 3.
Kind *3 : The kind of the component (B);
- B-1-1: ; High-pressure low density polyethylene (HPLD) ; a trade name of Sumikathene G 701 manufactured by Sumitomo Chemical Co., Ltd.
- B-1-2: ; High-pressure low density polyethylene (HPLD) ; a trade name of Sumikathene G 801 manufactured by Sumitomo Chemical Co., Ltd.
- B-2-1: ; Ethylene-methylmethacrylate copolymer resin (EMMA) containing 5.8 % by weight of methylmethacrylate ; a trade name of Acryft WD 103 manufactured by Sumitomo Chemical Co., Ltd.
- B-3-1: ; Ethylene-vinyl acetate copolymer resin (EVA) containing 5.0 % by weight of vinyl acetate ; a trade name of Sumikathene F 1103-1 manufactured by Sumitomo Chemical Co., Ltd.

The results shown in Tables 4 to 7 reveal the following :
The thermoplastic resin compositions of Examples, which meet the essential conditions of the present invention, exhibited satisfactory results in all of the evaluations shown in the Tables 4 and 5. On the other hand, the resin composition of Comparative Example 11, wherein MFR_{2. 16} and the product ( ①×② ) of MFR_{2. 16} and MFRR of the component (A) are too low, those of Comparative Examples 12, 16 and 21, wherein the product ( ①×② ) of the component (A) is too high, those of Comparative Examples 13 and 14, wherein MFRR of the component (A) is too low, those of Comparative Examples 15 and 17, wherein MFR_{2,16} and the product (①×② ) of MFR_{2. 16} and MFRR of the component (A) are too high, that of Comparative Example 18, wherein the density of the component (A) is too high, that of Comparative Example 19, wherein MFR_{2. 16} of the component (A) is too low, and those of Comparative Example 20, 22 and 23, wherein the proportion of the component (A) is too small (that is, the proportion of the component (B) is too large) or none, were inferior in at least one property among the evaluated properties.

As decribed above, according to the present invention, the method of coating the steel with the thermoplastic resin (composition) and the laminated article comprising the steel and said thermoplastic resin (composition), which is good in corrosion resistance, abrasion resistance, chemical resistance and processability, gives a coated surface with a low stickness and high hardness, and has a remarkably improved impact strength at low temperatures, may be provided.

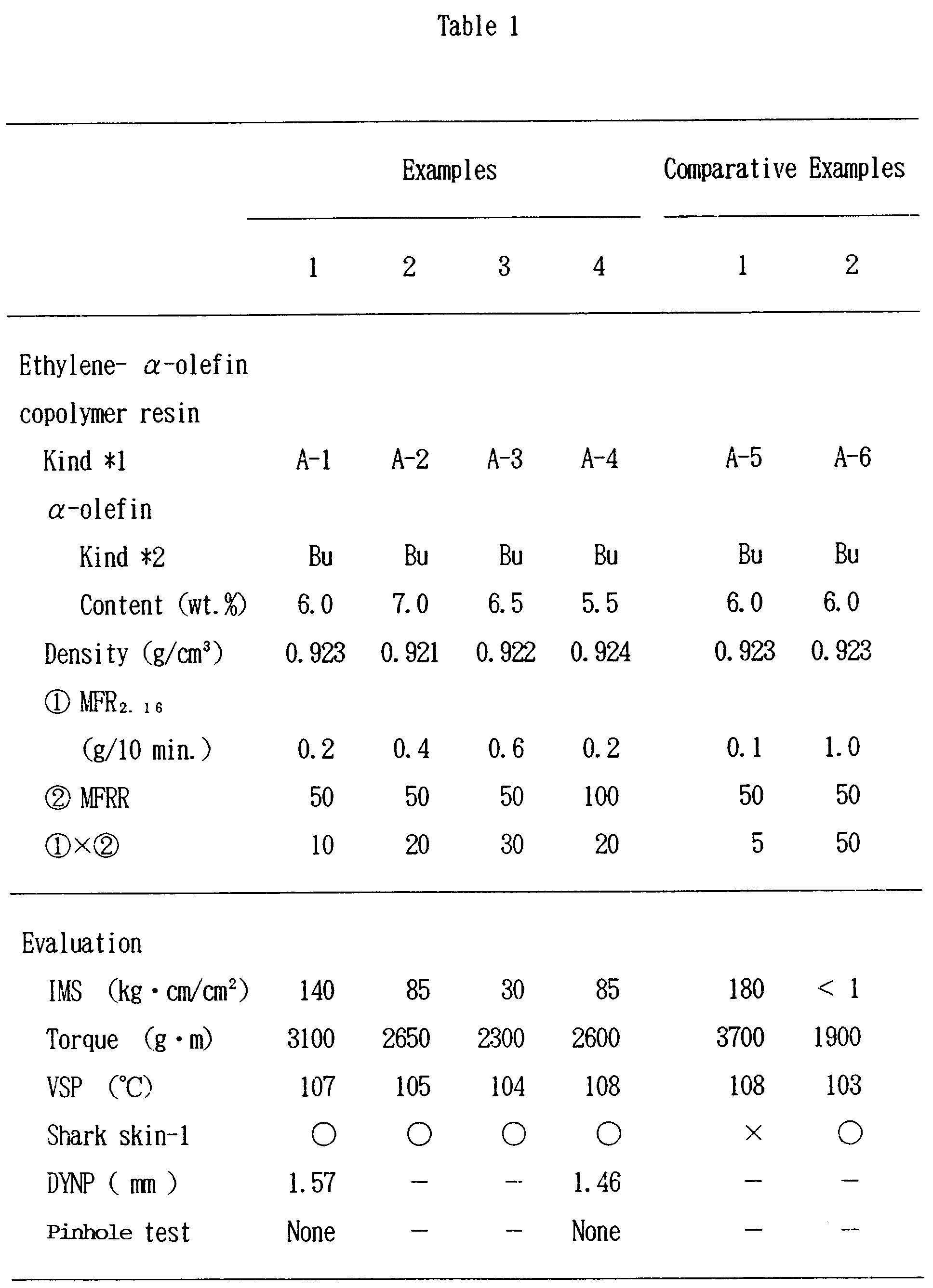

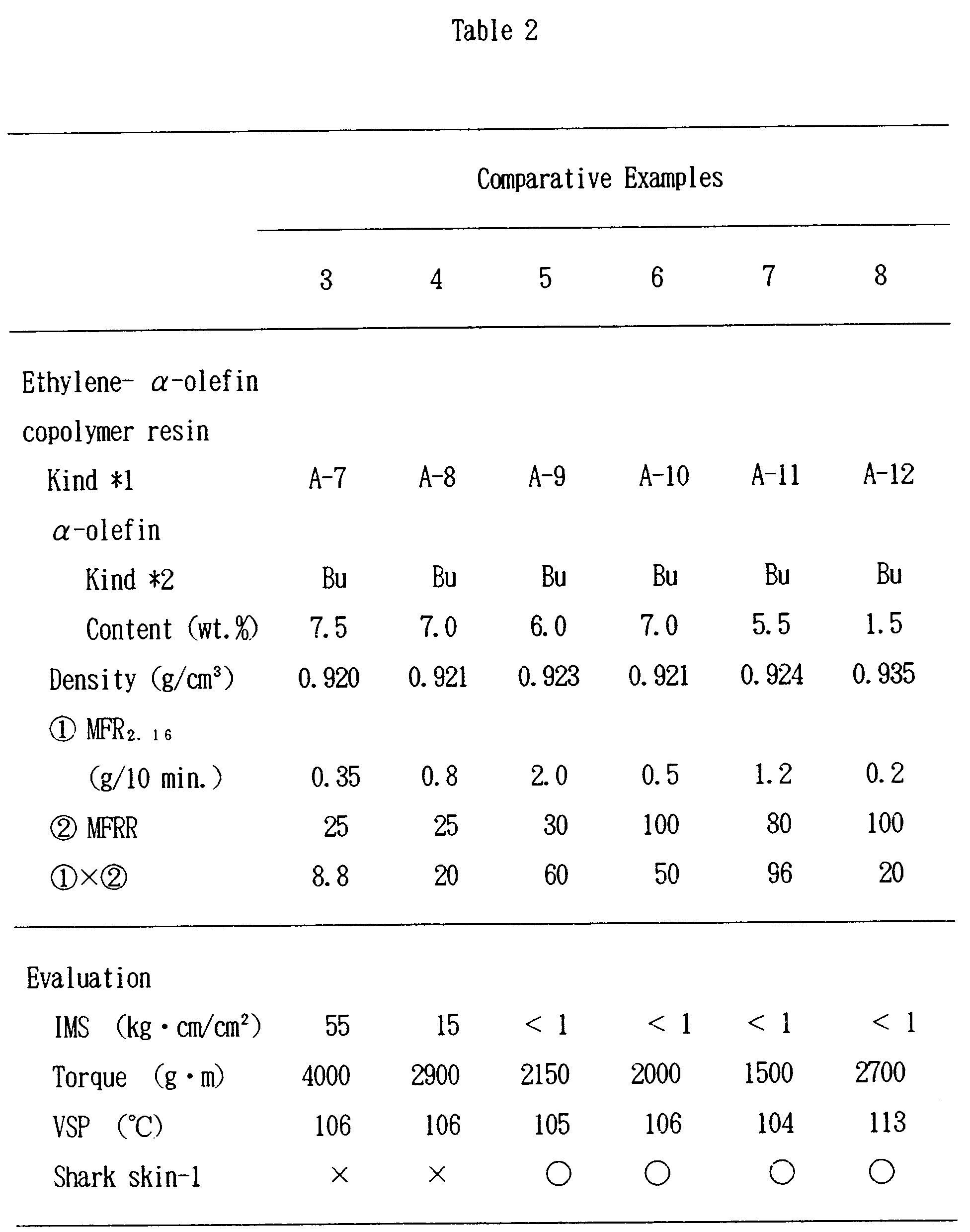

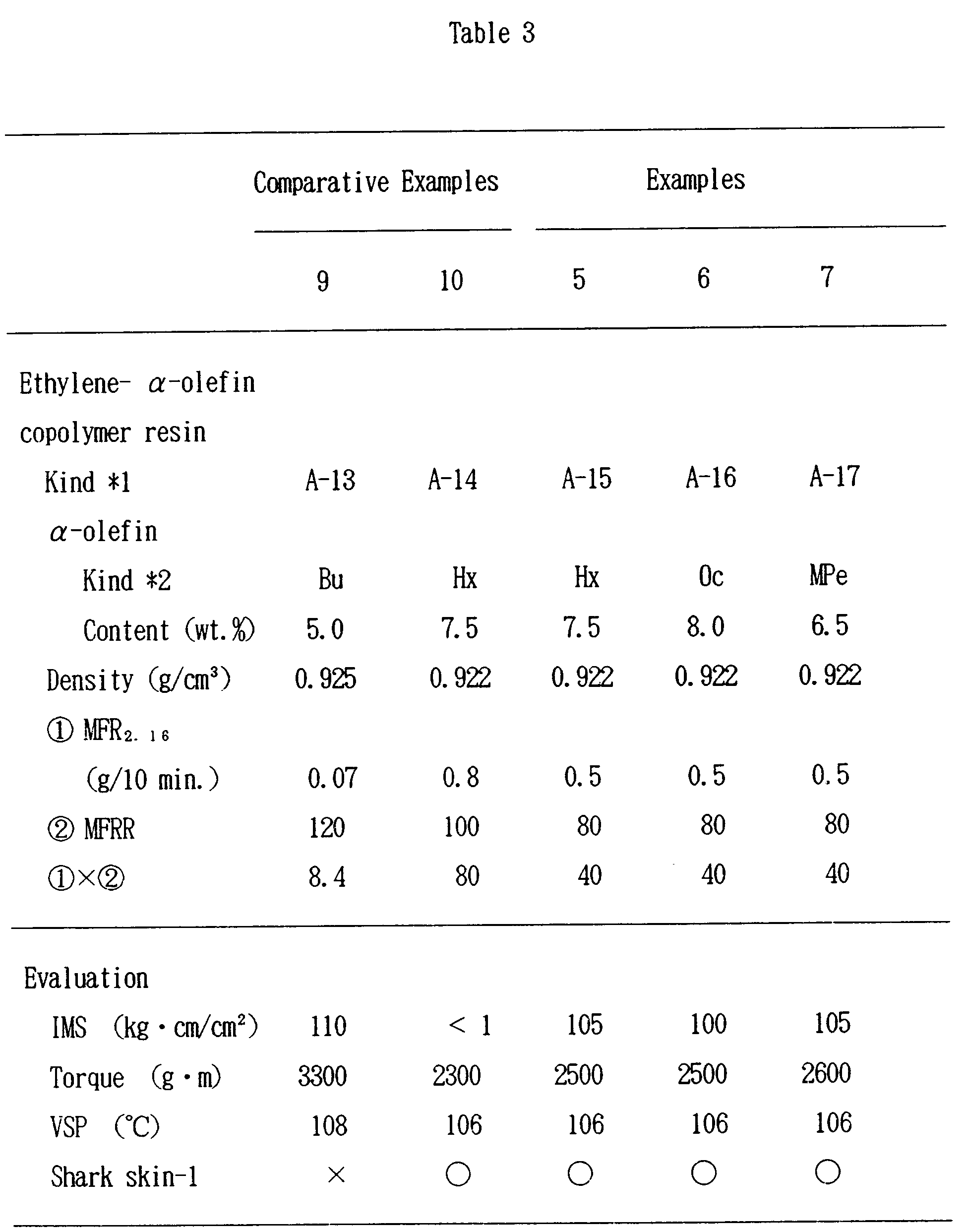

**Table 4**

| | Examples | | | | Comparative Examples | |
|---|---|---|---|---|---|---|
| | 8 | 9 | 10 | 11 | 11 | 12 |
| Component (A) | | | | | | |
| Ethylene-α-olefin copolymer resin | | | | | | |
| Kind *1 | A-1 | A-2 | A-3 | A-4 | A-5 | A-6 |
| Content (wt.%) | 85 | 85 | 85 | 85 | 85 | 85 |

| Component (B) | | | | | | |
|---|---|---|---|---|---|---|
| Kind *3 | B-1-1 | B-1-1 | B-1-1 | B-1-1 | B-1-1 | B-1-1 |
| MFR_{2. 16}(g/10 min.) | 7.0 | 7.0 | 7.0 | 7.0 | 7.0 | 7.0 |
| Content (wt.%) | 15 | 15 | 15 | 15 | 15 | 15 |

| Evaluation | | | | | | |
|---|---|---|---|---|---|---|
| IMS (kg • cm/cm) | 120 | 75 | 30 | 85 | 150 | < 1 |
| Torque (g • m) | 2900 | 2600 | 2300 | 2600 | 3700 | 1900 |
| VSP (°C) | 107 | 105 | 104 | 108 | 108 | 103 |
| Shark skin-2 | | | | | | |
| Shark skin | ○ | ○ | ○ | ○ | × | ○ |
| Streak | ○ | ○ | ○ | ○ | ○ | ○ |
| DYNP ( mm ) | 1.63 | - | - | - | - | - |
| Pinhole test | None | - | - | - | - | - |

**Table 5**

| | Examples | | | | |
|---|---|---|---|---|---|
| | 12 | 13 | 14 | 15 | 16 |
| Component (A) | | | | | |
| Ethylene-α-olefin copolymer resin | | | | | |
| Kind *1 | A-15 | A-16 | A-17 | A-2 | A-2 |
| Content (wt.%) | 85 | 85 | 85 | 85 | 85 |

| Component (B) | | | | | |
|---|---|---|---|---|---|
| Kind *3 | B-1-1 | B-1-1 | B-1-1 | B-2-1 | B-3-1 |
| MFR_{2. 16}(g/10 min.) | 7.0 | 7.0 | 7.0 | 0.5 | 0.5 |
| Content (wt.%) | 15 | 15 | 15 | 15 | 15 |

| Evaluation | | | | | |
|---|---|---|---|---|---|
| IMS (kg • cm/cm) | 100 | 100 | 105 | 150 | 150 |
| Torque (g • m) | 2600 | 2600 | 2600 | 2750 | 2750 |
| VSP (°C) | 106 | 106 | 106 | 104 | 104 |
| Shark skin-2 | | | | | |
| Shark skin | ○ | ○ | ○ | ○ | ○ |
| Streak | ○ | ○ | ○ | ○ | ○ |

**Table 6**

| | Comparative Examples | | | | | |
|---|---|---|---|---|---|---|
| | 13 | 14 | 15 | 16 | 17 | 18 |
| Component (A) | | | | | | |
| Ethylene-α-olefin copolymer resin | | | | | | |
| Kind *1 | A-7 | A-8 | A-9 | A-10 | A-11 | A-12 |
| Content (wt.%) | 85 | 85 | 85 | 85 | 85 | 85 |

| Component (B) | | | | | | |
|---|---|---|---|---|---|---|
| Kind *3 | B-1-1 | B-1-1 | B-1-1 | B-1-1 | B-1-1 | B-1-1 |
| MFR_{2. 16}(g/10 min.) | 7.0 | 7.0 | 7.0 | 7.0 | 7.0 | 7.0 |
| Content (wt.%) | 15 | 15 | 15 | 15 | 15 | 15 |

| Evaluation | | | | | | |
|---|---|---|---|---|---|---|
| IMS (kg • cm/cm) | 55 | 15 | < 1 | < 1 | < 1 | < 1 |
| Torque (g • m) | 3900 | 2800 | 2100 | 1900 | 1400 | 2600 |
| VSP (°C) | 106 | 106 | 105 | 106 | 104 | 113 |
| Shark skin-2 | | | | | | |
| Shark skin | × | × | ○ | × | ○ | ○ |
| Streak | ○ | ○ | ○ | ○ | ○ | ○ |

**Table 7**

| | Comparative Examples | | | | |
|---|---|---|---|---|---|
| | 19 | 20 | 21 | 22 | 23 |
| Component (A) | | | | | |
| Ethylene-α-olefin copolymer resin | | | | | |
| Kind *1 | A-13 | A-2 | A-14 | A-15 | - |
| Content (wt.%) | 85 | 60 | 85 | 70 | 0 |

| Component (B) | | | | | |
|---|---|---|---|---|---|
| Kind *3 | B-1-1 | B-1-1 | B-1-1 | B-1-2 | B-3-1 |
| MFR_{2. 16}(g/10 min.) | 7.0 | 7.0 | 7.0 | 20.0 | 0.5 |
| Content (wt.%) | 15 | 40 | 15 | 30 | 100 |

| Evaluation | | | | | |
|---|---|---|---|---|---|
| IMS (kg • cm/cm) | 110 | 15 | 15 | 15 | 250 |
| Torque (g • m) | 3300 | 1900 | 2300 | 2300 | 2400 |
| VSP (°C) | 108 | 103 | 106 | 104 | 83 |
| Shark skin-2 | | | | | |
| Shark skin | × | ○ | ○ | ○ | ○ |
| Streak | ○ | ○ | ○ | ○ | ○ |
| DYNP ( mm ) | - | - | - | - | >2.5 |
| Pinhole test | - | - | - | - | Exist |

## Claims

1. A method of coating steel, which method comprises applying to the steel an ethylene-α-olefin copolymer resin (A) having a density of 0.915 to 0.927 g/cm³, a melt flow rate determined at 190°C under a load of 2.16 kg (MFR_{2.16}) of 0.1 to 1.0 g/10 min. and a melt flow rate ratio (MFRR) defined by the formula (1):
MFRR = MFR_{21.6} / MFR_{2.16} (1)
wherein MFR_{21.6} is the melt flow rate determined at 190°C under a load of 21.6 kg, of 30 or more, the product of MFR_{2.16} and MFRR being from 8 to 45 g/10 min.

2. A method according to claim 1, wherein the α-olefin is butene-1 and the product of MFR_{2.16} and MFRR is from 8 to 30 g/10 min.

3. A method according to claim 1, wherein the α-olefin is hexene-1, octene-1 or 4-methylpentene-1.

4. A method according to any one of the preceding claims, wherein the density of the ethylene-α-olefin copolymer resin (A) is 0.918 to 0.924 g/cm³.

5. A method according to any one of the preceding claims, wherein MFRR is from 40 to 120.

6. A method according to claim 2, wherein the product of MFR_{2.16} and MFRR is from 10 to 25 g/10 min.

7. A method according to claim 3, wherein the product of MFR_{2.16} and MFRR is from 10 to 35 g/10 min.

8. A method of coating steel, which method comprises applying to the steel a thermoplastic resin composition comprising not less than 75% by weight but less than 100% by weight of a component (A) as defined in any one of claims 1 to 6 and not more than 25% by weight of a component (B), which is one or more of the following components (B-1), (B-2) and (B-3):
Component (B-1): a high-pressure low density polyethylene having a melt flow rate determined at 190°C under a load of 2.16 kg of 0.2 to 100 g/10 min;
Component (B-2): an ethylene-unsaturated carboxylic acid ester copolymer resin containing 0.1 to 10% by weight of an unsaturated carboxylic acid ester and having a melt flow rate determined at 190°C under a load of 2.16 kg of 0.2 to 100 g/10 min;
Component (B-3): an ethylene-vinyl ester copolymer resin containing 0.1 to 10% by weight of a vinyl ester and having a melt flow rate determined at 190°C under a load of 2.16 kg of 0.2 to 100 g/10 min.

9. A method according to claim 8, wherein the amount of component (A) is 75 to 95% by weight and the amount of component (B) is 25 to 5% by weight.

10. A method according to claim 8 or 9, wherein the MFRR of component (A) is from 40 to 100.

11. A method of coating a steel with a thermoplastic resin composition according to claim 8, wherein the α-olefin of component (A) is hexene-1, octene-1 or 4-methylpentene-1 and the product of MFR_{2.16} and MFRR of component (A) is 10 to 40 g/10 min.

12. A laminate which comprises a steel substrate and, coated thereon, an ethylene-α-olefin copolymer resin (A) as defined in any one of claims 1 to 7.

13. A laminate which comprises a steel substrate and, coated thereon, a thermoplastic resin composition as defined in any one of claims 8 to 11.

14. A laminate according to claim 12 or 13, wherein the substrate is a steel pipe.
